## Europäisches Patentamt

## European Patent Office

## Office européen des brevets

(11) Veröffentlichungsnummer: **0 109 973**
**A1**

(12) # EUROPÄISCHE PATENTANMELDUNG

(21) Anmeldenummer: **82111082.2**

(22) Anmeldetag: **01.12.82**

(51) Int. Cl.³: **H 04 L 11/16**, G 06 F 3/04

(43) Veröffentlichungstag der Anmeldung: **13.06.84**
**Patentblatt 84/24**

(84) Benannte Vertragsstaaten: **AT BE CH DE FR GB IT LI LU NL SE**

(71) Anmelder: **Reilhofer, Johannes, Emmeringer Strasse 5, D-8000 München 60 (DE)**

(72) Erfinder: **Reilhofer, Johannes, Emmeringer Strasse 5, D-8000 München 60 (DE)**

(74) Vertreter: **Schmidt-Evers, Jürgen et al, Patentanwälte Dipl.-Ing. H. Mitscherlich Dipl.-Ing. K. Gunschmann Dipl.-Ing. Dr.rer.nat. W. Körber Dipl.-Ing. J. Schmidt-Evers Dipl.-Ing. W. Melzer Steinsdorfstrasse 10, D-8000 München 22 (DE)**

(54) Verfahren und Anordnung zur Übermittlung von Daten zwischen mehreren Rechnern.

(57) Es wird ein Verfahren und eine Anordnung zur Übermittlung von Daten zwischen mehreren Rechnern (Ci) angegeben, bei denen zunächst die Daten von jedem der Rechner (Ci) über entsprechende Schreib-Interfaces (WIi) an einen einzigen Datenbus (100) in einer bestimmten vorgegebenen Reihenfolge abgegeben werden. Anschließend werden die Daten von den Rechnern (Ci) über entsprechende Lese-Interfaces (RIi) von dem Datenbus (100) in einer bestimmten zweiten Reihenfolge wieder ausgelesen. Jeder der Rechner schreibt auf den Datenbus (100) zu jeweils einer ganz bestimmten ihm zugeordneten Zeit ein. Alle Rechner sind jederzeit zum Empfang von Daten von dem Datenbus (100) bereit. Ein externer nur dem Datenbus (100) zugeordneter Kommandogenerator (10) kann aufeinanderfolgende Kommandoworte in den Datenbus (100) einspeisen, aus denen jedes Schreib-Interface den jeweils zutreffenden Zeitpunkt für das Einschreiben von Daten in den Datenbus (100) sowie die Zeitdauer ermittelt, während der die Daten in den Datenbus (100) geschrieben werden können. Zum Einkoppeln der Daten in den Datenbus (100) kann jeweils ein in den Datenbus (100) eingeschaltetes Dämpfungsglied (101) vorgesehen sein, dessen Dämpfungsgrad veränderbar ist.

VERFAHREN UND ANORDNUNG ZUR ÜBERMITTLUNG VON
DATEN ZWISCHEN MEHREREN RECHNERN.

Die Erfindung betrifft ein Verfahren und eine
Anordnung zur Übermittlung von Daten zwischen
mehreren Rechnern,bei denen die Rechner jeweils
mit einem gemeinsamen einzigen Datenbus verbunden
sind und über ein geeignetes Interface jeweils
Daten an den Datenbus abgeben (Schreiben) und von
dem Datenbus empfangen (Lesen) können.

Verfahren und Anordnungen dieser Art sind an sich
bekannt, auch solche, die einen einzigen Datenbus
aufweisen, an dem die einzelnen Rechner hintereinanderliegend angeschaltet sind.

Die einzelnen Rechner stehen in bidirektionaler
Weise im Datenaustausch mit dem Datenbus. Dabei
ist häufig eine einzige Ein/Ausgabe-Einheit für
jeden Rechner vorgesehen, die mit dem Datenbus
verbunden ist. Dies erfordert jedoch, daß für die
Korrespondenz, d.h. für die Art und Weise, in der
die Daten zwischen einzelnen Rechnern ausgetauscht
werden, ein bestimmtes Organisations-Schema vorgesehen ist. Insbesondere muß Vorsorge dafür getroffen sein, daß, wenn zwei der Rechner miteinander in Nachrichtenverbindung stehen sollen,
nicht beide Rechner gleichzeitig Daten an den
Datenbus abgeben (Schreiben). Dies mag bei zwei
Rechnern noch vergleichsweise einfach zu lösen
sein, jedoch führt diese notwendige Organisation
bei einer größeren Anzahl von Rechnern zwangsweise dazu, daß die Daten nur sehr langsam und zeitraubend ausgetauscht werden können.

Es ist Aufgabe der Erfindung,ein Verfahren und eine Anordnung der eingangs genannten Art so auszubilden, daß die Übermittlung von Daten zwischen den Rechnern schneller erfolgen kann.

Die Erfindung geht von der grundsätzlichen Überlegung aus, daß die einzelnen Rechner mit dem einzigen Datenbus nur in unidirektionalem Betrieb in Nachrichtenverbindungen stehen und daß die hintereinander an den Datenbus angeschalteten Rechner zweimal mit dem Datenbus verbunden sind, und zwar einmal zur Abgabe von Daten an den Datenbus (Schreiben) und zum zweiten zum Empfang der (für den jeweiligen Rechner bestimmten) Daten von dem Datenbus (Lesen).

Die Aufgabe wird bei dem Verfahren der eingangs genannten Art durch die kennzeichnenden Merkmale des Anspruchs 1 gelöst.

Die Aufgabe wird bei der Anordnung der eingangs genannten Art durch die kennzeichnenden Merkmale des Anspruchs 3 gelöst.

Die Erfindung wird durch die Merkmale der Unteransprüche weitergebildet.

Jeder Rechner schreibt die abzugebenden Informationen zu einem vorgegebenen Zeitpunkt in den Datenbus ein, wobei ferner jeder Rechner alle am Datenbus befindlichen Informationen, d.h. die Daten von jedem der Rechner empfängt oder liest, und gegebenenfalls die für ihn jeweils zutreffenden Daten auswählt.

Das Lese-Interface des gerade sendenden Rechners empfängt damit auch die eigene Nachricht, wodurch jeder Rechner in dem dafür vorgesehenen Speicherbereich die gleichen Daten enthält.

Entscheidend dabei ist, daß alle Rechner völlig gleichberechtigt sind und keine übergeordnete Kommunikationszentrale vorhanden ist. Eine solche übergeordnete Kommunikationszentrale , die beispielsweise auch durch einen bevorrechtigten Hauptrechner gebildet sein kann, würde die Steuerung des Datenaustausches zwischen den verschiedenen nebengeordneten Rechnern erschweren und insbesondere durch den Umweg über die Kommunikationszentrale auch verlangsamen.

Am Anfang des Datenbusses kann ein Kommandogenerator vorgesehen sein, der in gewissen zeitlichen Abständen ein Kommandowort ausgibt. Die Lücke zwischen aufeinanderfolgenden Kommandoworten ist in Wortbereiche unterteilt, deren jeder einem der Rechner zugeordnet ist. Der jeweilige Rechner kann in den ihm zugeordneten Wortbereich Daten einschreiben, wenn er im Schreibbetrieb arbeitet. Jeder Rechner kann von einem der anderen Rechner in den Datenbus eingeschriebene Daten auslesen und gegebenenfalls verarbeiten. Der Kommandogenerator ist somit keiner übergeordneten Kommunikationszentrale zuzuordnen, sondern stellt lediglich ein Hilfsmittel zur zweckmäßigen Steuerung dar. Wie bei einem bekannten Meßdatenerfassungssystem (DE-AS 28 01 2o9) kann jeder Rechner an den Datenbus über passive Beeinflussung angekoppelt sein, d.h. mittels eines Dämpfungsgliedes.

4    0109973

Es sei erwähnt, daß die Steuerung der zeitlichen Folge des Datenstroms am Datenbus auch auf andere Weise erfolgen kann, beispielsweise kann jeder Rechner die Weitergabe der um den durch ihn geschriebenen Wortbereich ergänzten Gesamtnachricht selbst steuern, was allerdings bei sehr unterschiedlichen Datenwort-Mengen für die Rechner unter Umständen zu unerwünschten Verzögerungen bei dem Datenaustausch führen könnte.

Die Erfindung wird anhand der in der Zeichnung dargestellten Ausführungsbeispiele näher erläutert. Es zeigen

Fig. 1   schematisch eine Anordnung zur Übermittlung von Daten gemäß einem Ausführungsbeispiel der Erfindung,

Fig. 2   schematisch den Aufbau der am Datenbus übermittelten Nachrichten,

Fig. 3   schematisch eine Ausführungsform des Anschlusses eines Rechners an den Datenbus.

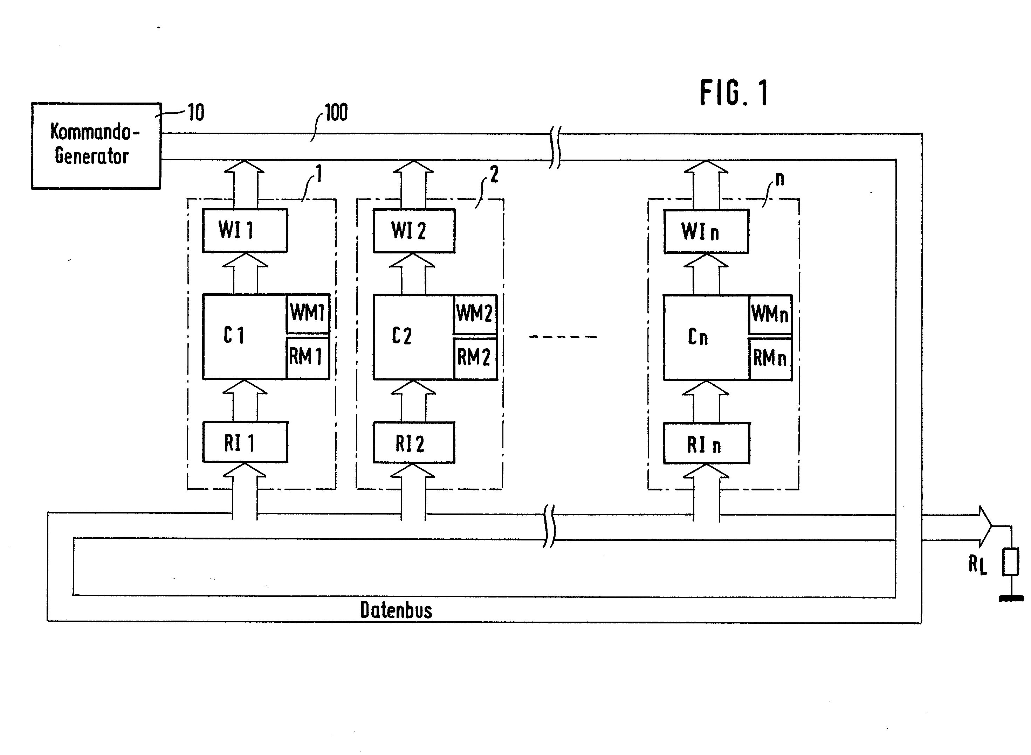

Fig. 1 zeigt mehrere Recheneinheiten 1,2..n, die im wesentlichen ähnlich aufgebaut sind und jeweils aus einem Rechner C1,C2..Cn, einem Schreib-Interface WI1,WI2..WIn und einem Lese-Interface RI1,RI2..RIn bestehen. Die Rechner C1,C2..Cn enthalten jeweils einen Schreibspeicher WM1,WM2..WMn und einen Lesespeicher RM1,RM2..RMn. Im übrigen können die Recheneinheiten 1,2..n sehr unterschiedlich ausgebildet sein, es ist lediglich erforderlich, daß Kompatibilität bezüglich der Austauschbarkeit von Daten besteht, was beispielsweise wie üblich mittels Code-Wandlern sichergestellt werden könnte.

Jede Recheneinheit 1,2..n steht mit dem Datenbus 1oo in doppelter Weise in Datenaustausch. Zum einen können Daten aus dem Rechner Ci (i=1,2..n) über den Schreibspeicher WMi und über das Schreib-InterfaceWIi in den Datenbus 1oo eingeschrieben werden. Zum andern können Daten auf dem Datenbus 1oo über das Schreib-Interface RIi in den Rechner Ci über dessen Schreibspeicher RMi eingeschrieben werden.

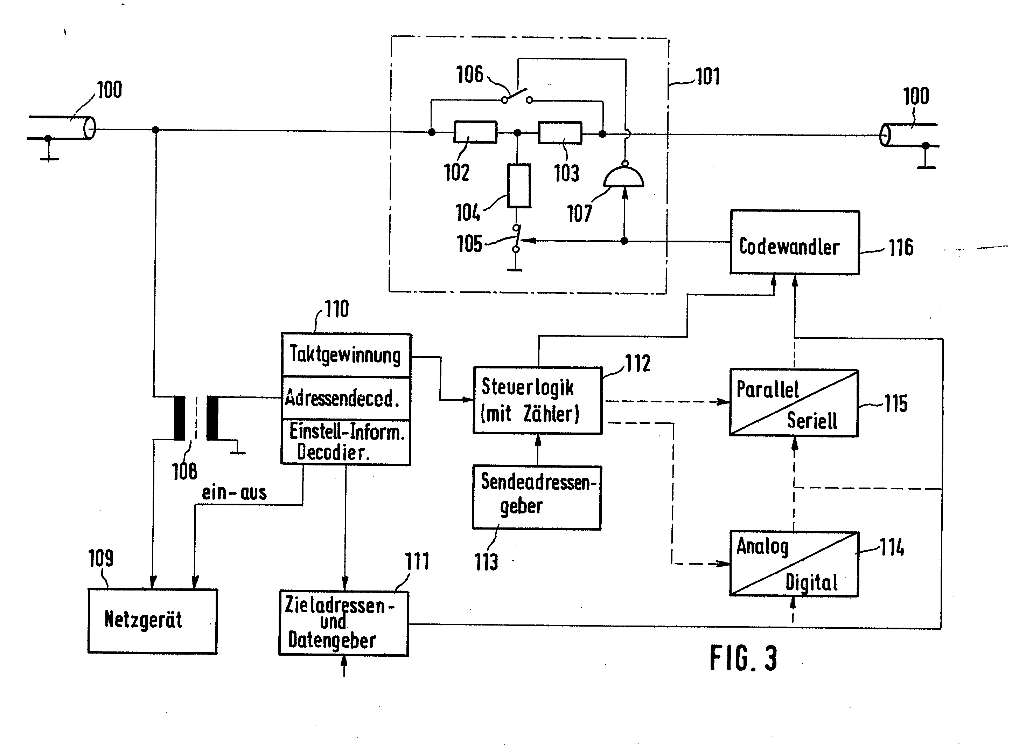

Die verschiedenen Recheneinheiten 1,2..n sind hintereinander in einer vorbestimmten Reihenfolge, im vorliegenden Fall in numerisch aufsteigender Reihenfolge ihrer Benennung, zum Einschreiben von Daten in den Datenbus 1oo an den Datenbus 1oo angekoppelt, beispielsweise in der anhand Fig. 3 erläuterten Weise. Ferner sind die Recheneinheiten 1,2..n in einer zweiten Reihenfolge, die im vorliegenden Fall der ersteren Reihenfolge gleich ist, ein zweites Mal wiederum hintereinanderliegend an den Datenbus 1oo angekoppelt. Die Ankopplung der ersten auslesenden Recheneinheit, hier der Recheneinheit 1, an den Datenbus 1oo erfolgt nach der Ankopplung des letzten in den Datenbus 1oo einschreibenden Recheneinheit, hier der Recheneinheit n. Durch diese Anordnung ist gewährleistet, daß alle von irgendeiner der Recheneinheiten 1,2..n in den Datenbus 1oo eingeschriebenen Daten von jeder der Recheneinheiten 1,2..n auch ausgelesen werden können.

Um zu vermeiden, daß irgendwelche von einer der Recheneinheiten 1,2..n in den Datenbus 1oo geschriebenen Daten verloren gehen können, beispielsweise durch Überschreiben durch Daten von einer der anderen Recheneinheiten, sind die Zeitpunkte, zu denen die verschiedenen Recheneinheiten 1,2..n in den Datenbus 1oo einschreiben, sowie die Zeitdauer, während der das Einschreiben erfolgen kann, festgelegt und zeitlich versetzt.

Dies erfolgt bei dem in Fig. 1 dargestellten Ausführungsbeispiel mit Hilfe eines Kommandogenerators 1o, der in bestimmten zeitlichen Abständen ein Kommandowort, beispielsweise bestehend aus einem Synchronwort und einem System-Datenwort, in den Datenbus 1oo einspeist. Die einzelnen Recheneinheiten 1,2...n erfassen das Kommandowort und ermitteln daraus einen ihnen jeweils zugeordneten Zeitpunkt, zu dem sie Daten mit einer bestimmten Menge von Datenworten in den Datenbus 1oo einschreiben können. Die vorbestimmte Menge an Datenworten, die die einzelnen Recheneinheiten 1,2,...n über ihr jeweiliges Schreib-Interface WIi einschreiben können, kann von Recheneinheit zu Recheneinheit unterschiedlich sein, kann jedoch für alle Recheneinheiten gleich sein.

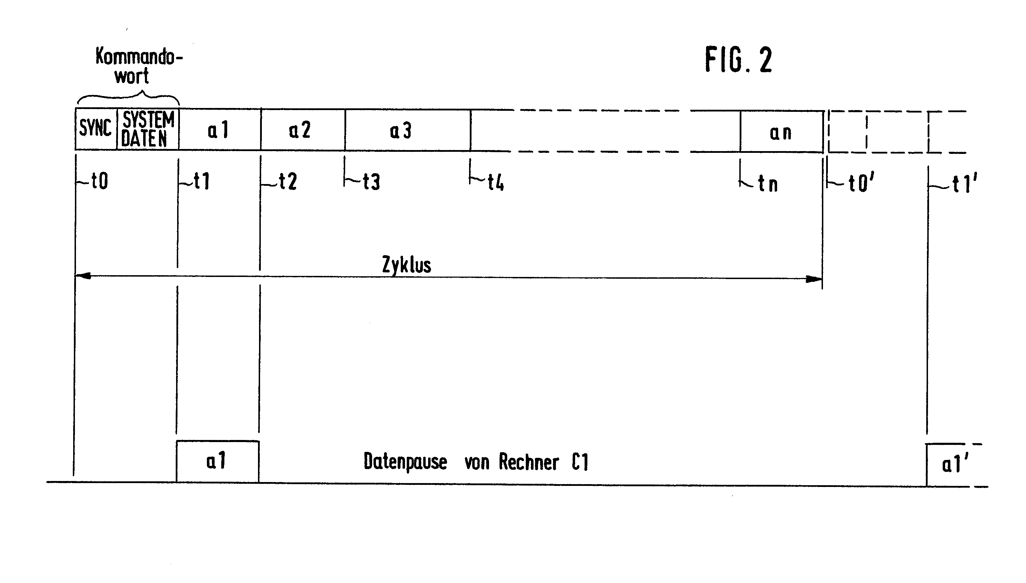

Dies sei anhand der in Fig. 2 dargestellten Datenfolge näher erläutert.

Es sei angenommen, daß der Kommandogenerator 1o zu einem Zeitpunkt t0 das Kommandowort bestimmter stets gleicher Dauer und gleichen Informationsgehaltes abgibt. Die in der ersten vorbestimmten Reihenfolge erste Recheneinheit 1 erfaßt das Kommandowort und bestimmt daraus den Zeitpunkt t1, zu dem sie beginnt oder beginnen kann Daten in den Datenbus 1oo einzuschreiben. Der Recheneinheit 1 ist dabei ein Wortbereich a1 bestimmter Wortlänge zugeordnet. Beispielsweise kann der Wortbereich a1 eine Länge von 1oo Datenworte umfassen. Spätestens zu einem Zeitpunkt t2 hat die erste Recheneinheit 1 die Abgabe von Datenworten beendet. Anschließend hat die Recheneinheit 1 eine Datenpause, d.h. gibt keine Daten an den Datenbus 1oo ab, bis nicht erneut aufgrund der Erfassung eines Kommandowortes ein neuer Zeitpunkt t1' bestimmt wird.

Die in der ersten vorbestimmten Reihenfolge nächstfolgende Recheneinheit 2 erfaßt ebenfalls das Kommandowort und bestimmt auf dessen Grundlage einen Zeitpunkt t2, zu dem es in einer der vorerwähnten ähnlichen Weise eine Menge von Datenworten während eines vorgegebenen Wortbereiches a2 abgeben kann. Die Menge der in dem Wortbereich a2 abgebbare Datenworte kann dabei der in dem Wortbereich a1 gleich sein, sich aber auch von dieser unterscheiden. Spätestens zu einem Zeitpunkt t3 hat die zweite Recheneinheit 2 das Schreiben der Datenworte auf den Datenbus 1oo beendet. Jede folgende Recheneinheit geht in gleicher Weise vor, bis die letzte Recheneinheit n der ersten vorbestimmten Reihenfolge die Abgabe der Datenworte in dem ihr zugeordneten Wortbereich an, der zu einem Zeitpunkt tn beginnt, beendet hat. Damit ist ein Zyklus beendet. Der nächste Zyklus beginnt wieder mit der Abgabe eines Kommandwortes vom Kommandogenerator 1o zu einem Zeitpunkt to', der nach dem Zeitpunkt liegt, zu dem der der letzten Recheneinheit n zugeordnete Wortbereich an des vorhergehenden Zyklus geendet hat. Zwischen dem Ende des vorhergehenden Zyklus und dem Beginn des nächstfolgenden Zyklus kann eine Lücke vorgesehen sein. Auf diese Weise ist sichergestellt, daß jeder der Rechner nur zu einer ganz bestimmten Zeit in den Datenbus 1oo schreiben kann, zu der keine andere der Recheneinheiten in den Datenbus 1oo schreibt. Ferner ist dadurch sichergestellt, daß pro Zyklus nur eine ganz bestimmte maximale Menge an Datenworten von einer der Recheneinheiten in den Datenbus 1oo geschrieben werden kann, daß also eine ungünstige langdauernde Belegung durch eine       Recheneinheit vermieden ist.

Empfangsseitig ist jede der Recheneinheiten 1,2...n stets zum Auslesen bereit und erfaßt alle über den Datenbus 1oo zugeführten Daten, wähltjedoch zweckmäßigerweise und in an sich üblicher Weise lediglich die Daten aus, die für die jeweilige Recheneinheit bestimmt sind, was zweckmäßigerweise über die Angabe einer Zieladresse zu Beginn jeder Nachricht erfolgt, die selbstverständlich in jedem Wortbereich erneut wiederholt werden muß,falls die zu übermittelnde Nachricht sich über mehrere Wortbereiche erstreckt.

Wie Fig. 1 zeigt ist der Datenbus über einen Lastwiderstand $R_L$ abgeschlossen, jedoch kann auch ein ringförmig geschlossener Datenbus vorgesehen sein, in den der Kommandogenerator 1o  sein Kommandowort einkoppelt.

Auf diese Weise wird erreicht, daß jede der Recheneinheiten mit jeder anderen der Recheneinheiten in Datenaustausch treten kann, ohne daß es einer externen Steuerung bedarf und ohne daß es eines besonderen Organisationsschemas bedarf mittels dem das gleichzeitige Senden zweier Recheneinheiten vermieden wird, die miteinander Daten austauschen sollen.

Das Blockschaltbild gemäß Fig.3 zeigt den Aufbau einer Ankoppelungsanordnung einer Recheneinheit an den Datenbus 1oo. Der Datenbus 1oo weist ein abgeschirmtes Kabel auf, dessen Abschirmung an Masse liegt. In den Verlauf des Datenbus     1oo bzw. des ihn bildenden abgeschirmten Kabels ist ein Dämpfungsglied 1o1 geschaltet.

Das Dämpfungsglied 1o1 besteht aus zwei Serien-impedanzen 1o2,1o3 und einer Parallel-Impedanz 1o4, die ein T-Glied bilden. Die beiden Serien-Impedanzen 1o2,1o3 sind durch einen elektronischen Schalter 1o6 überbrückt. Mit der Parallel-Impedanz 1o4 ist ein elektronischer Schalter 1o5 reihengeschaltet. Die beiden elektronischen Schaltungen 1o5, 1o6 werden gegensinnig bzw. gegenphasig betrieben, was bei dem dargestellten Ausführungsbeispiel durch einen Inverter 1o7 sichergestellt ist. Wenn der Schalter 1o6 geöffnet und somit der Schalter 1o5 geschlossen ist, werden die über den Datenbus 1oo übertragenen Signale gedämpft. Wenn andererseits der Schalter 1o6 geschlossen und somit der Schalter 1o5 geöffnet ist, erfolgt keine Dämpfung.

Die von dem Kommandogenerator 1o und gegebenenfalls den der jeweiligen Recheneinheit vorgeschalteten Recheneinheiten abgegebenen Signale gelangen zunächst an einen Übertrager 1o8. Dieser trennt Gleichstrom-signale von Wechselsignalen, wodurch ein Netzgerät 1o9 ausgelöst werden kann, das die übrigen Schal-tungsteile mit Betriebsspannung versorgt.

Die Daten bildenden Signale gelangen über den Über-trager 1o8 an einen Schaltungsteil 11o, in dem eine Taktfrequenz rückgewonnen wird und einer Steuerlogik 112 zugeführt wird. Ferner kann eine Adressen-Decodierung sowie eine Decodierung einer Einstellinformation in dem Kommandowort erfolgen. Als Einstellinformation können z.B. Ein/Ausschaltsignale für das Netzgerät 1o8 oder Verstärkungs-Verstellsignale für einen Zieladressen- und Datengeber 111 übertra-gen werden. Aus dem erfaßten Kommandowort wird die Bereitschaft des Datenbus. 1oo ermittelt, von der hier angeschalteten Recheneinheit Datenworte aufzunehmen. Diese Information wird an das Netzgerät
1o9 und an den Zieladressen- und Datengeber 111
weitergeleitet.

Der Zieladressen- und Datengeber 111 ermittelt aus
dem ihm zugeordneten Rechner die auf den Datenbus
1oo zu gebenden Informationen und gibt diese mit
Hilfe der Steuerlogik 112 gesteuert ab. Für den
Fall, daß die von dem Zieladressen- und Datengeber
111 abgegebene Information eine analoge Information
ist und über den Datenbus 1oo digitale Informationen
zu übertragen sind, werden die analogen Informationen
einem in Strichlinien dargestellten Analog-Digital-
Umsetzer 114 zugeführt, in dem durch die Steuerlogik 112 gesteuert die analogen Informationen in
digitale Informationen umgesetzt werden, beispielsweise in 12-Bit-Informationen. Für den Fall, daß
die Digital-Informationen in paralleler Form vorliegen, werden diese einem Parallel-Seriell-Umsetzer
115 zugeführt, der die parallel zugeführten digitalen
Informationen in  serielle Form umsetzt. Die seriellen digitalen Informationen werden einem Code-Wandler
116 zugeführt, der unter Steuerung durch die Steuerlogik 112 die serielle digitale Information in eine
über den Datenbus 1oo zu übertragende Information
umsetzt, beispielsweise den 12-Bit-Code unter Einbeziehung von 4-Hilfsbit in einen 16-Bit-Code umsetzt,
mit dessen Hilfe auch die elektronischen Schalter
1o5,1o6 angesteuert werden.

Dies zeigt, daß Rechnereinheiten unterschiedlichen
Aufbaus hintereinanderliegend an den Datenbus 1oo
angeschlossen werden können.

Die Steuerlogik 112 enthält einen Zähler, der aus dem zugeführten Kommandowort den Zeitpunkt und die Zeitdauer ermittelt, also den Wortbereich ai festlegt, während dem die jeweils an den Datenbus 1oo angeschaltete Recheneinheit Daten an den Datenbus 1oo abgibt. Ist der jeweilige Zeitpunkt ti erreicht, gibt die Steuerlogik 112 an den Code-Wandler 116 einen Befehl zur Ansteuerung der elektronischen Schalter 1o5,1o6 ab. Es sei erwähnt, daß der Code-Wandler 116 ausgangsseitig einen Ansteuerverstärker aufweisen kann. Ein derartiger Ansteuerverstärker kann jedoch gesondert zwischen dem Code-Wandler 116 und dem Dämpfungsglied 1o1 vorgesehen sein. Die Steuerlogik 112 steuert gegebenenfalls auch den A/D-Umsetzer 114 und/oder den Parallel-Seriell-Umsetzer 115 an. Ferner kann ein Sendeadressengeber 113 mit der Steuerlogik 112 verbunden sein, mittels dem in jedem Wortbereich ai eine Sendeadresse einschreibbar ist, die die Recheneinheit festlegt, von der die Informationen abgegeben worden sind. Dies kann für die empfangenden Recheneinheiten von Interesse sein. Der Sendeadressengeber kann jedoch in dem Code-Wandler 116 integriert vorgesehen sein.

Der Empfangsteil jeder Recheneinheit, d.h. das mit dem Datenbus 1oo jeweils verbundene Lese-Interface RIi kann in üblicher Weise ausgebildet sein. Entsprechend den für das Schreib-Interface WIi erläuterten Alternativen für den Rechner Ci jeder Recheneinheit, kann das Lese-Interface wahlweise einen Code-Wandler , entsprechend dem Code-Wandler 116 des Schreib-Interfaces, einen Seriell/Parallel-Umsetzer , entsprechend dem Parallel-Seriell-Umsetzer 115, und einen D/A-Umsetzer, entsprechend dem A/D-Umsetzer 114 des Schreib-Interface WIi, aufweisen.

Ferner enthält der Empfangsteil zweckmäßigerweise eine an sich übliche Auswerte-Schaltung, die in jedem Wortbereich ai die Zieladresse ermittelt und mit der jeweils eigenen Adresse vergleicht und bei Koinzidenz die in dem jeweiligen Wortbereich ai enthaltenen Daten ausliest, insbesondere in den Lesespeicher RMi. Solche Schaltungen sind an sich üblich und werden daher nicht näher erläutert.

Somit ist wesentlich, daß jede der Recheneinheiten, die nacheinander in den Datenbus 1oo einschreibt, jeweils zu einem ganz bestimmten Zeitpunkt und während einer ganz bestimmten Zeitdauer einschreiben kann, während jede der Recheneinheiten stets zum Empfang von auf dem Datenbus 1oo befindlichen Daten bereit ist. Dadurch wird erreicht, daß jede Recheneinheit die zu übertragenden Informationen abgeben kann, ohne daß die Gefahr eines Überschreibens durch Informationen von einer anderen Recheneinheit besteht und ohne daß die Gefahr besteht, daß die Recheneinheit, für die die Informationen bestimmt sind, diese nicht empfangen kann, weil sie gerade selbst sendet.

Bei einer größeren Anzahl von an den Datenbus 1oo angeschlossenen Recheneinheiten kann es notwendig sein, einen Laufzeitausgleich vorzusehen, wie das an sich bekannt ist.

Die in Fig. 1 angegebenen Anordnung ist in einfacher Weise erweiterbar. Es ist lediglich erforderlich, die neue Recheneinheit an den Datenbus in der geschilderten Weise anzuschließen und ihr einen Zeitpunkt innerhalb des nunmehr verlängerten Zyklus zuzuordnen, zu dem die neu angeschlossene Recheneinheit ihre Daten auf den Datenbus 1oo geben kann.

An den anderen Recheneinheiten sind keine Maßnahmen vorzusehen. Auch wenn die neue Recheneinheit, räumlich gesehen, zwischen die bereits an den Datenbus 1oo angeschlossenen Recheneinheiten eingefügt wird, kann sich der dieser neuen Recheneinheit zugeordnete Wortbereich zeitlich an die bisherigen Wortbereiche, d.h. an den bisher gültigen Zyklus anschließen. Falls der neue Wortbereich jedoch in gleicher Weise in die bisherige Folge der Wortbereiche eingefügt werden soll, ist es lediglich erforderlich, bei den in der Folge der Wortbereiche nachfolgenden Recheneinheiten die Zeitpunkte entsprechend neu anzupassen, zu denen die Abgabe der Daten an den Datenbus 1oo jeweils erfolgen soll. Dies trifft im wesentlichen auch dann zu, wenn eine Änderung der Länge der Wortbereiche bei bestimmten Recheneinheiten vorgenommen werden soll.

Schließlich kann noch eine Überwachung dergestalt vorgesehen sein, daß eine Recheneinheit auch die von ihr selbst abgegebene Nachricht wieder empfängt und durch Vergleich der Speicherinhalte im Schreibspeicher und im Lesespeicher feststellt, ob die empfangene Nachricht mit der gesendeten Nachricht noch übereinstimmt. Dies ist von Vorteil, wenn der Datenbus erhebliche räumliche Ausdehnung besitzt und Störungen ausgesetzt sein kann.

ANSPRÜCHE

1. Verfahren zur Übermittlung von Daten zwischen mehreren Rechnern, bei dem Daten von jedem Rechner an einen gemeinsamen einzigen Datenbus abgegeben und Daten am Datenbus von jedem Rechner empfangen werden können,
dadurch gekennzeichnet,
daß die Daten zunächst von jedem Rechner in einer bestimmten ersten Reihenfolge an den Datenbus abgegeben werden (Schreiben) und anschließend von jedem Rechner in einer bestimmten zweiten Reihenfolge empfangen werden (Lesen).

2. Verfahren nach Anspruch 1,
dadurch gekennzeichnet,
daß die zweite Reihenfolge der ersten Reihenfolge gleich ist.

3. Anordnung zur Übermittlung von Daten zwischen mehreren Rechnern (C1...Cn), die jeweils mit einem

gemeinsamen einzigen Datenbus (1oo) verbunden sind und die über ein geeignetes Interface jeweils Daten an den Datenbus abgeben (Schreiben) und vom Datenbus empfangen (Lesen) können, dadurch gekennzeichnet, daß die Rechner (C1..Cn) zunächst über ein jeweiliges Schreib-Interface (WI1..WIn) in einer bestimmten vorwählbaren Reihenfolge mit dem Datenbus (1oo) verbunden sind und daran anschließend über ein jeweiliges Lese-Interface (RI1..RIn) in einer zweiten vorwählbaren Reihenfolge mit dem Datenbus (1oo) verbunden sind.

4. Anordnung nach Anspruch 3, dadurch gekennzeichnet, daß die zweite Reihenfolge der ersten Reihenfolge gleich ist.

5. Anordnung nach Anspruch 3 oder 4, dadurch gekennzeichnet, daß am Anfang des Datenbus (1oo) ein Kommandogenerator (1o) angeordnet ist, der in vorgegebenen zeitlichen Abständen ein Kommandowort an den Datenbus abgibt, und daß der Zwischenraum zwischen aufeinanderfolgenden Kommandoworten in aufeinanderfolgende der (ersten) Reihenfolge entsprechende jeweils einem der Rechner (C1..Cn) zugeordnete Wortbereiche (a1..an) unterteilt ist, in die der jeweils zugeordnete Rechner (C1..Cn) eine jeweils vorbestimmte Menge an Datenworten einschreiben kann.

6. Anordnung nach einem der Ansprüche 3 bis 5, dadurch gekennzeichnet, daß zumindest jedes Schreib-Interface (WI1..WIn) ein in den Datenbus (1oo) eingeschaltetes Dämpfungs-

glied (1o1) aufweist, dessen Dämpfungsgrad entsprechend der vom zugeordneten Rechner (C1..Cn) zu verarbeitenden Daten veränderbar ist.

7.  Anordnung nach Anspruch 5 oder 6,
    dadurch gekennzeichnet,
    daß das Kommandowort Adress- und Einstellinformationen für jeden Rechner (C1..Cn) zur Bestimmung des jeweiligen Wortbereich-Anfangs (t1..tn) enthält.

8.  Anordnung nach einem der Ansprüche 5 bis 7,
    dadurch gekennzeichnet,
    daß zumindest jedes Schreib-Interface (WI1..WIn) einen Zeitgeber-Schaltungsteil (11o,112,113) enthält, der anhand eines jeweils vorgegebenen festen Zeitwertes und einer jeweils vorgegebenen festen Zeitdauer unter Auswertung des Kommandowortes den Zeitpunkt des Anfangs und die Dauer des jeweiligen Wortbereiches (a1..an) bestimmt.

9.  Anordnung nach Anspruch 8,
    dadurch gekennzeichnet,
    daß der Zeitgeber-Schaltungsteil (11o,112,113) einen Zähler enthält, der ausgehend vom Kommandowort Wortbereich-Einheiten zählt.

1o. Anordnung nach einem der Ansprüche 6 bis 9,
    dadurch gekennzeichnet,
    daß das Dämpfungsglied (1o1) aus einer Serienimpedanz (1o2,1o3) und einer Parallelimpedanz (1o4) besteht, daß zur Serienimpedanz (1o2,1o3) ein Schalter (1o6) parallel geschaltet ist und/ oder mit der Parallelimpedanz (1o4) ein Schalter (1o5) reihengeschaltet ist, wobei bei Verwendung von beiden Schaltern (1o5,1o6) diese gegenphasig betrieben werden.

FIG. 1

FIG. 2

Kommando-wort

| SYNC | SYSTEM DATEN | a1 | a2 | a3 | | | an | | |

$t0$    $t1$    $t2$    $t3$    $t4$    $tn$    $t0'$    $t1'$

Zyklus

a1      Datenpause von Rechner C1      a1'

2/3

0109973

FIG. 3

010973

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | US-A-3 732 374  (IBM)<br><br>* Spalte 2, Zeilen 10-27, 46-62; Spalte 3, Zeilen 1-5; Spalte 4, Zeilen 21-67; Spalte 5, Zeilen 44-66; Spalte 9, Zeilen 30-40; Spalte 12, Zeilen 4-24; Figuren 1-4,6 *<br><br>--- | 1,2,4, 5 | H 04 L    11/16<br>G 06 F     3/04 |
| Y | WO-A-8 000 883  (SMITT)<br><br>* Seite 1, Zeilen 1-5; Seite 3, Zeilen 23-28; Seite 5, Zeilen 14-20; Seite 6, Zeilen 31-34; Seite 7, Zeilen 1-5; Figuren 1,2A,2B *<br><br>--- | 1,3,5, 7 | |
| Y,D | DE-A-2 801 209  (REILHOFER)<br>* Seite 6, Zeilen 20-30; Seite 7, Zeilen 10-32; Seite 8, Zeilen 1-12, 28-31; Seite 9, Zeilen 1-2; Seite 11, Zeilen 1-9; Seite 14, Zeilen 8-20; Seite 15, Zeilen 18-27; Figuren 1,3,5 *<br><br>----- | 5-10 | **RECHERCHIERTE SACHGEBIETE (Int. Cl. ³)**<br><br>H 04 L    11/16<br>G 06 F     3/04<br>H 04 G     9/14 |

Der vorliegende Recherchenbericht wurde für alle Patentansprüche erstellt.

| Recherchenort<br>DEN HAAG | Abschlußdatum der Recherche<br>28-07-1983 | Prüfer<br>DHEERE R.F.B.M. |
|---|---|---|